# EUROPÄISCHE PATENTSCHRIFT

(11) **EP 0 760 371 B1**
(45) Veröffentlichungstag und Bekanntmachung des Hinweises auf die Patenterteilung: **27.11.2002**
(21) Anmeldenummer: 96113288.3
(22) Anmeldetag: 20.08.1996
(51) Int. Cl.: C07F 7/16

(54) **Verfahren zur Herstellung von Alkylhalogensilanen**
Process for preparing alkylhalogensilanes
Procédé de préparation d'alkylhalogènosilanes

(30) Priorität: 01.09.1995 DE 19532315
(43) Veröffentlichungstag der Anmeldung: 05.03.1997
(73) Patentinhaber: GE Bayer Silicones GmbH & Co. KG, 40699 Erkrath (DE)
(72) Erfinder: Steiner, Matthias-Sven, Dr., 51373 Leverkusen (DE); Schild, Christoph, Dr., 51373 Leverkusen (DE); Degen, Bruno, Dr., 53804 Much (DE)

(56) Entgegenhaltungen:
- EP-A- 0 223 447
- DE-A- 3 436 381
- DE-B- 1 062 700

## Beschreibung

Die vorliegende Erfindung bezieht sich auf ein Verfahren zur Herstellung von Alkylhalogensilanen nach dem Oberbegriff des Anspruchs 1. Insbesondere bezieht sich die vorliegende Erfindung auf ein Verfahren zur Herstellung von Methylchlorsilanen.

Das grundlegende Verfahren zum Herstellen von Mehylchlorsilanen ist die direkte Umsetzung von gemahlenem Silicium mit Methylchlorid in Gegenwart von mindestens einem Kupfer bzw. Kupferverbindungen enthaltenden Katalysator. Die Umsetzung ist dem Fachmann als "Rochow-Synthese" bekannt und in der US-PS 2 380 995 beschrieben.

Nach diesem Verfahren erhält man eine Mischung von Methylchlorsilanen, bei der Dimethyldichlorsilan den Hauptanteil stellt. Darüber hinaus bilden sich Methyltrichlorsilan, sowie weitere Produkte, wie z.B. Trimethylchlorsilan, Tetramethylsilan, Methylhydrogendichlorsilan und höhersiedende Methylchlordisilane.

Seit der Entdeckung der Synthese hat es eine Vielzahl von Aktivitäten gegeben, die sich damit beschäftigen, das Verfahren zur Durchführung der Synthese zu verbessern und den Anteil an Dimethyldichlorsilan zu erhöhen, d.h. die Synthese möglichst selektiv im Hinblick auf die Bildung von Dimethyldichlorsilan zu führen.

Letzteres erreicht man vor allem durch das Beachten von Reinheitskriterien bezüglich der Rohstoffe und durch den gezielten Einsatz von Promotoren. Bekannte Promotoren sind dabei z.B. Zink, Zinn und Phosphor, elementar oder in Form ihrer Verbindungen (z.B. EP--A 223 447).

Dabei werden neben Zink und gegebenenfalls Zinn auch flüchtige Phosphorverbindungen als Promotoren eingesetzt (siehe EP-A 0 391 133). Phosphorhaltige Kontaktmassen weisen jedoch den Nachteil auf, dass die Produktionsrate, selbst in Anwesenheit zusätzlicher Promotoren, relativ gering ist und der Anteil an Methyldichlorsilan, ein Indiz für unerwünschte Crack-Prozesse des Methylchlorid-Alkylchlorsilangemisches, zu hoch ist.

Aufgabe der vorliegenden Erfindung war daher die Bereitstellung eines Verfahrens zur Herstellung von Alkylchlorsilanen, das sich durch eine hohe Selektivität, einen geringen Anteil an Methylhydrogendichlorsilan (MeH) und eine hohe Produktionsrate auszeichnet. Als Maß für die Selektivität wird in der Literatur meist das Verhältnis von Methyltrichlorsilan zu Dimethyldichlorsilan (Tri/Di) angegeben.

Überaschenderweise wurde nun gefunden, dass unter Verwendung leicht flüchtiger bzw. gasförmiger halogen- und/oder alkoxyhaltiger Schwefelverbindungen diese Anforderungen erfüllt und zusätzlich ein gutes (Tri/Di)-Verhältnis und ein verringerter Anteil an hochsiedenden Bestandteilen erzielt werden kann.

Dies ist um so erstaunlicher, als S und SO₂ in der Literatur vielfach als Katalysatorgifte dargestellt werden (N.P. Lobusevich et al., Zhurnal Obshchei Khimii, Vol. 34, S. 2706-2708 (1964), Zhurnal Prikladnoi Khimii Vol. 38, No. 8, S. 1884 (1965)).

Gegenstand der vorliegenden Erfindung ist daher ein Verfahren zur Herstellung von Alkylhalogensilanen durch Umsetzung von Silicium mit einem Alkylhalogenid in Gegenwart von mindestens einem Kupfer bzw. Kupferverbindungen enthaltenden Katalysator, welches dadurch gekennzeichnet ist, dass die Umsetzung in Gegenwart von leicht flüchtigen bzw. gasförmigen halogen- und/oder alkoxyhaltigen Schwefelverbindungen und gegebenenfalls weiteren Promotorsubstanzen durchgeführt wird.

Weitere Merkmale des erfindungsgemäßen Verfahrens sind in den Unteransprüchen 2 bis 4 enthalten.

Leicht flüchtige bzw. gasförmige halogen- und/oder alkoxyhaltige Schwefelverbindungen im Sinne der Erfindung sind Verbindungen der Formel I

SₐO_{b}X_{c} (I)

mit

| X = | a | b | c |
|---|---|---|---|
| F | 1 oder 2 | 0,1 oder 2 | 2 |
| | | | 4 für b = 0 |
| | | | 6 für a = 1 und b = 0 |
| | | | 10 für a = 2 und b = 0 |
| Cl | 1 oder 2 | 0,1 oder 2 | 2 |
| | | | 4 für a = 1 und b = 0 |
| Br | 1 oder 2 | 0 oder 1 | 2 |
| I | 2 | 0 | 2 |
| C₁-C₁₈-Alkoxy, vorzugsweise C₁-C₈-Alkoxy | 1 | 1 oder 2 | 2 |

sowie deren Polyschwefelverbindungen.

X kann im Molekül auch eine Kombination von verschiedenen Halogen- und/oder Alkoxyresten darstellen.

Die eingesetzten leicht flüchtigen bzw. gasförmigen halogen- und/oder alkoxyhaltigen Schwefelverbindungen können nach bekannten Methoden auch in-situ erzeugt werden.

Besonders bevorzugt sind SOCl₂, SO₂Cl₂, SCl₂ und/oder S₂Cl₂, ganz besonders bevorzugt SOCl₂.

Als Katalysator im Sinne der Erfindung können alle gängigen Kupferkatalysatoren eingesetzt werden, beispielhaft werden genannt: teiloxidiertes Kupfer (Cu°/Cu₂O/CuO) (US 4 500 724), Mischungen aus metallischem Kupfer und Cu₂O/CuO (DE-A 3 501 085), Cu₂Cl₂, CuCl₂ (US 4 762 940), Cu-Formiat (US 4 487 950), etc.. Bevorzugt wird teiloxidiertes Kupfer (Cu°/Gu₂O/CuO) eingesetzt. Der Kupferkatalysator wird dabei vorzugsweise in einer Menge von 0,05 bis 10 Gew.-%, besonders bevorzugt 0,1-7 Gew.-%, bezogen auf Silicium, eingesetzt.

Als Silicium im Sinne der Erfindung kann Silicium mit einer Reinheit von > 95 % eingesetzt werden. Bevorzugt wird Silicium mit einer Reinheit > 98 %. Die Teilchengröße des eingesetzten Siliciums kann beliebig gewählt werden, beträgt aber vorzugsweise zwischen 50-500 µm.

Als Alkylhalogenide im Sinne der Erfindung werden alle gängigen C₁-C₈-Alkylhalogenide eingesetzt, bevorzugt Methylchlorid.

Als Silicium kann ebenfalls eingesetzt werden: verdüstes Silicium gemäß US-A 50 15 751 oder auch strukturoptimiertes Silicium gemäß EP-A 610 807, oder Silicium, hergestellt gemäß EP-A 673 880 bzw. EP-A 522 844.

Spezielle Siliciumsorten, wie z.B. in DE-A 40 37 021 oder EP-A 685 428 beschrieben, können ebenfalls verwendet werden.

Selbstverständlich wird durch den Einsatz von leicht flüchtigen bzw. gasförmigen halogen- und/oder alkoxyhaltigen Schwefelverbindungen die Anwendung anderer bekannter Promotorsubstanzen, wie z.B. Zink oder Zinkverbindungen, Aluminium oder Aluminiumverbindungen, Zinn oder Zinnverbindungen bzw. Phosphor oder Phosphorverbindungen, alleine oder in Kombination, nicht ausgeschlossen.

Bevorzugt werden Zinn, Aluminium, Phosphor oder Zink, alleine oder in Kombinationen, in elementarer Form oder in Form ihrer Verbindungen eingesetzt.

Der Begriff Verbindung schließt dabei Legierungen mit ein.

Die Promotoren werden vorzugsweise, sofern sie vorhanden sind, in folgenden Mengen zugesetzt:
- Zinn: 5-200 Teile pro 1.000 000 Teile Silicium und/oder
- Zink: 10-10.000 Teile pro 1.000.000 Teile Silicium und/oder
- Aluminium: 0,01-1 Gew.-%, bezogen auf Silicium und/oder
- Phosphor: 20-2500 Teile pro 1.000 000 Teile Silicium.

Das Verfahren wird üblicherweise in dem für die Rochow-Synthese gängigen Temperatur- und Druckbereich durchgeführt.

Bevorzugt ist eine Temperatur zwischen 280-390°C und ein Druck von 1 bis 10 bar.

Bei der bevorzugten Durchführungsform der vorliegenden Erfindung setzt man die gewünschte Menge der leicht flüchtigen bzw. gasförmigen halogen- und/oder alkoxyhaltigen Schwefelverbindung dem kontinuierlich über die Kontaktmasse geleiteten Alkylhalogenid entweder in kurzen Intervallen diskontinuierlich oder kontinuierlich zu. Die eingesetzte Menge orientiert sich im diskontinuierlich betriebenen Versuch (z.B. im Labor) an der eingesetzten Menge an Kontaktmasse, im kontinuierlich geführten Prozeß zweckmäßigerweise an der Menge an frischer Kontaktmasse, die meist ebenfalls kontinuierlich in den Reaktor nachgefüllt wird. Über die Gasphase ist eine optimale Verteilung der leicht flüchtigen bzw. gasförmigen halogen- und/oder alkoxyhaltigen Schwefelverbindungen gewährleistet. Die Menge beträgt zwischen 5 und 2000 ppm, bevorzugt zwischen 10 und 500 ppm, bezogen auf die Kontaktmasse. Dabei bezieht man sich auf den Schwefelgehalt der jeweiligen zum Einsatz kommenden Schwefelverbindung.

Das erfindungsgemäße Verfahren ist auch nicht auf eine bestimmte Verfahrenstechnik bei der Direktsynthese beschränkt. So kann die Reaktion diskontinuierlich oder kontinuierlich geführt werden, und es kann sowohl im Fließbett, im Rührbett als auch im Festbett gearbeitet werden.

Die Vorteile beim Einsatz leicht flüchtiger gasförmiger halogen- und/oder alkoxyhaltiger Schwefelverbindungen liegen, wie in den folgenden Beispielen gezeigt wird, darin, daß neben einer Verminderung des Anteils an hochsiedenden Bestandteilen ein gutes (Tri/Di)-Verhältnis und eine deutliche Senkung des MeH-Anteils hydrogen bei guter Produktionsrate erzielt wird.

Die nachfolgenden Beispiele sollen die vorliegende Erfindung näher illustrieren, sind aber keinesfalls einschränkend zu verstehen (%-Angaben bedeuten Gew.-%).

### Ausführungsbeispiele

Die folgenden Experimente wurden in einem Rührbettreaktor aus Glas, innerer Durchmesser = 30 mm, der mit einem Spiralrührer ausgestattet ist, durchgeführt. Zum Einsatz kam Silicium in einer Reinheit von 98,8 % mit einer Korngrößenverteilung von 71-160 µm.

Die Kontaktmasse bestand aus 40 g Silicium, 3,2 g Kupferkatalysator und 0,05 g ZnO und wurde vor Einsatz homogenisiert.

Methylchlorid wurde unter einem Druck von 2 bar von unten über eine Glasfritte durch die Kontaktmasse geleitet. Der Drucksatz an Methylchlorid wurde konstant gehalten und betrug in allen Fällen ca. 1,8 l/h. Nach Durchlaufen der Induktionsphase wurde eine stationäre Versuchsphase bei 300°C eingestellt. Unter diesen Bedingungen wurde die Menge an gebildetem Rohsilan pro Zeiteinheit bestimmt. Die Ermittlung der Einzelbestandteile erfolgte gaschromatographisch.

Die angegebenen Werte sind Mittelwerte aus jeweils vier Einzelbestimmungen, jeder Versuch wurde reproduziert.

### Beispiel 1

Beispiel 1 zeigt den Einfluß verschiedener halogen- und/oder alkoxyhaltiger Schwefelverbindungen auf das Ergebnis der Rochow-Synthese. Ausgewählt wurde SOCl₂ sowie S₂Cl₂.

Es wurde Silicum mit der Charakteristik Al: 0,095 %; Ca: 0.048 %; Fe: 0,50 %; Ti: 0,023 % verwendet. Versuch 5 wurde als Vergleichsversuch ohne Zusatz von halogen- und/oder alkoxyhaltigen Schwefelverbindungen durchgeführt.

**Tabelle 1.**

| Zusatz von halogen- und/oder alkoxyhaltigen Schwefelverbindungen zur Kontaktmasse | | | | | | | |
|---|---|---|---|---|---|---|---|
| Versuch | Zusatz Schwefel [ppm] | Schwefelverbindung | Prod.-Rate [g/h]¹⁾ | MeH [%]¹⁾ | Di [%]¹⁾ | Tri/Di¹⁾ | PS [%]²⁾ |
| 1 | 50 | SOCl₂ | 6,0 | 1,7 | 88,9 | 0,071 | 1,6 |
| 2 | 100 | SOCl₂ | 6,1 | 1,3 | 90,5 | 0,062 | 1,8 |
| 3 | 200 | SOCl₂ | 6,8 | 1,6 | 89,2 | 0,070 | 1,4 |
| 4 | 200 | S₂Cl₂ | 6,8 | 1,6 | 88,6 | 0,073 | 0,6 |
| 5 | - | - | 4,6 | 2,0 | 89,0 | 0,067 | 1,3 |

| | | | | | | | |
|---|---|---|---|---|---|---|---|
| ¹⁾ MeH: Methylhydrogendichlorsilan MeHSiCl₂; Di: Dichlordimethylsilan Me₂SiCl₂; Tri/Di; (Trichlormethylsilan MeSiCl₃/Dichlordimethylsilan Me₂SiCl₂); Prozentangaben (Gew.%) beziehen sich auf die angefallenen Monomeren | | | | | | | |
| ²⁾ PS: Polysilane (Siedepunkt (1013 mbar) > 80°C), Prozentangabe bezieht sich auf Gesamtmenge gebildetes Silangemisch | | | | | | | |

Tabelle 1 zeigt, daß halogen- und/oder alkoxyhaltige Schwefelverbindungen alleine den Anteil an MeH und an hochsiedenden Verbindungen im Produktspektrum senken und einen positiven Einfluß auf die Produktionsrate besitzen.

### Beispiel 2

Dieses Beispiel zeigt den Einfluß einer Kombination von halogen- und/oder alkoxyhaltigen Schwefelverbindungen (als Beispiel wurde SOCl₂ gewählt) in Kombination mit Phosphor (z.B. in Form von PCl₃) auf das Ergebnis der Rochow-Reaktion.

Es wurde dasselbe Silicium wie in Beispiel 1 verwendet.

**Tabelle 2.**

| Zusatz von halogen- und/oder alkoxyhaltigen Schwefelverbindungen und Phosphor zur Kontaktmasse | | | | | | | |
|---|---|---|---|---|---|---|---|
| Versuch | Zusatz Schwefel [ppm] | Zusatz Phosphor [ppm] | Prod.-Rate [g/h]¹⁾ | MeH [%]¹⁾ | Di [%]¹⁾ | Tri/Di¹⁾ | PS [%]²⁾ |
| 5 | - | 50 | 5,7 | 2.3 | 88,5 | 0,069 | 1,1 |
| 6 | - | 100 | 4,0 | 2,0 | 90,1 | 0,059 | 2,1 |
| 7 | 50 | 50 | 6,3 | 2,0 | 89,3 | 0,065 | 1,6 |
| 8 | 100 | 100 | 4,6 | 1,7 | 90,8 | 0,056 | 0,7 |

| | | | | | | | |
|---|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | | |
| ²⁾ PS: Polysilane (Siedepunkt (1013 mbar) > 80°C), Prozentangabe bezieht sich auf Gesamtmenge gebildetes Silangemisch | | | | | | | |

Die Ergebnisse der Tabelle 2 zeigen, daß halogen- und/oder alkoxyhaltige Schwefelverbindungen in Gegenwart von phosphorhaltigen Promotoren die Produktionsrate steigern sowie den Anteil an MeH und den hochsiedenden Verbindungen erniedrigen sowie zusätzlich zu einem verbesserten (Tri/Di)-Verhältnis führen.

### Beispiel 3

Dieses Beispiel zeigt den Einfluß einer Kombination von halogen- und/oder alkoxyhaltigen Schwefelverbindungen (als Beispiel wurde SOCl₂ gewählt) in Kombination mit Zinn (z.B. in Form von metallischem Zinn) auf das Ergebnis der Rochow-Reaktion.
Es wurde das selbe Silicium wie in Beispiel 1 verwendet.

**Tabelle 3.**

| Zusatz von halogen- und/oder alkoxyhaltigen Schwefelverbindungen und Zinn zur Kontaktmasse | | | | | | | |
|---|---|---|---|---|---|---|---|
| Versuch | Zusatz Schwefel [ppm] | Zusatz Zinn [ppm] | Prod.-Rate [g/h]¹⁾ | MeH [%]¹⁾ | Di [%]¹⁾ | Tri/Di¹⁾ | PS [%]²⁾ |
| 9 | - | 50 | 8,3 | 1,3 | 91,0 | 0,053 | 3,9 |
| 10 | 100 | 50 | 8,8 | 1,1 | 90,4 | 0,059 | 3,4 |

| | | | | | | | |
|---|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | | |
| ²⁾ PS: Polysilane (Siedepunkt (1013 mbar) > 80°C), Prozentangabe bezieht sich auf Gesamtmenge gebildetes Silangemisch | | | | | | | |

Die Ergebnisse der Tabelle 3 zeigen, daß halogen- und/oder alkoxyhaltige Schwefelverbindungen in Gegenwart von zinnhaltigen Promotoren positiv auf die Produktionsrate wirken und den Anteil an MeH sowie an hochsiedenden Verbindungen erniedrigen.

### Beispiel 4

Dieses Beispiel zeigt den Einfluß einer Kombination von halogen- und/oder alkoxyhaltigen Schwefelverbindungen (als Beispiel wurde SOCl₂ gewählt) in Kombination mit Aluminium als Promotor (z.B. in Form von Cu₉Al₄) auf das Ergebnis der Rochow-Reaktion.

Es wurde das selbe Silicium wie in Beispiel 1 verwendet.

**Tabelle 4.**

| Zusatz von halogen- und/oder alkoxyhaltigen Schwefelverbindungen und Aluminium zur Kontaktmasse | | | | | | | |
|---|---|---|---|---|---|---|---|
| Versuch | Zusatz Schwefel [ppm] | Zusatz Aluminium [ppm] | Prod.-Rate [g/h]¹⁾ | MeH [%]¹⁾ | Di [%]¹⁾ | Tri/Di¹⁾ | PS [%]²⁾ |
| 11 | - | 50 | 5,5 | 2,1 | 88,0 | 0,074 | 3,0 |
| 12 | - | 100 | 6,0 | 2,3 | 87,7 | 0,072 | 4,4 |
| 13 | 100 | 50 | 5,9 | 1,4 | 89,8 | 0,066 | 1,5 |

| | | | | | | | |
|---|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | | |
| ²⁾ PS: Polysilane (Siedepunkt (1013 mbar) > 80°C), Prozentangabe bezieht sich auf Gesamtmenge gebildetes Silangemisch | | | | | | | |

Die Ergebnisse der Tabelle 4 zeigen, daß halogen- und/oder alkoxyhaltige Schwefelverbindungen in Gegenwart von Aluminium deutlich den Anteil an hochsiedenden Verbindungen senken, eine Verringerung an MeH erzielen sowie eine gute Produktionsrate erzielen.

## Patentansprüche

1. Verfahren zur Herstellung von Alkylhalogensilanen durch Umsetzung von Silicium mit einem Alkylhalogenid in Gegenwart von mindestens einem *Kupfer bzw. Kupferverbindungen enthaltenden* Katalysator, **dadurch gekennzeichnet, daß** die Umsetzung in Gegenwart von leicht flüchtigen bzw, gasförmigen halogen- und/oder alkoxyhaltigen Schwefelverbindundungen und gegebenenfalls weiteren Promotorsubstanzen durchgeführt wird.

2. Verfahren nach Anspruch 1, **dadurch gekennzeichnet, daß** als die leicht flüchtige bzw. gasförmige Schwefelverbindung SOCl₂, SO₂Cl₂, SCl₂ und /oder S₂Cl₂ eingesetzt wird.

3. Verfahren nach einem der Ansprüche 1 oder 2 **dadurch gekennzeichnet, daß** man als Alkylhalogenid Methylchlorid einsetzt.

4. Verfahren nach einem der Ansprüche 1 bis 3, **dadurch gekennzeichnet, daß** als Promotorsubstanzen zusätzlich Zinn, Zink, Phosphor und Aluminium, alleine oder in Kombination, in elementarer Form oder in Form ihrer Verbindungen eingesetzt werden.

## Claims

1. Method for preparing alkyl halogen silanes by reacting silicon with an alkyl halide in the presence of at least one catalyst containing copper or copper compounds, **characterized in that** the reaction is carried out in the presence of readily volatile or gaseous halogen- and/or alkoxy-containing sulphur compounds and optionally additional promoter substances.

2. Method according to Claim 1, **characterized in that** the readily volatile or gaseous sulphur compound used is SOCl₂, SO₂Cl₂, SCl₂ and/or S₂Cl₂.

3. Method according to either of Claims 1 and 2, **characterized in that** the alkyl halide used is methyl chloride.

4. Method according to any of Claims 1 to 3, **characterized in that** the promoter substances additionally used are tin, zinc, phosphorus and aluminium, alone or in combination, in elemental form or in the form of their compounds.

## Revendications

1. Procédé pour la préparation d'alkylhalogénosilanes par réaction de silicium avec un halogénure d'alkyle en présence d'au moins un catalyseur contenant du cuivre respectivement des composés du cuivre, **caractérisé en ce que** la réaction est réalisée en présence de composés du soufre très volatils respectivement gazeux contenant un halogène et/ou un groupe alcoxy et éventuellement d'autres substances de promoteurs.

2. Procédé selon la revendication 1, **caractérisé en ce que** l'on utilise comme composés du soufre très volatils respectivement gazeux SOCl₂, SO₂Cl_{2,} SCl₂ et/ou S₂Cl₂.

3. Procédé selon l'une des revendications 1 ou 2, **caractérisé en ce que** l'on utilise comme halogénure d'alkyle du chlorure de méthyle.

4. Procédé selon l'une des revendications 1 à 3, **caractérisé en ce que** l'on utilise comme substances de promoteurs en plus de l'étain, du zinc, du phosphore et de l'aluminium, seuls ou en combinaison, dans une forme élémentaire ou dans une forme de leurs composés.
